# EUROPEAN PATENT APPLICATION

(11) **EP 4 394 260 A1**
(43) Date of publication of application: **03.07.2024**
(21) Application number: 22861160.4
(22) Date of filing: 11.08.2022
(51) Int. Cl.: F24D 3/00, B60H 1/22, F24D 13/04

(54) **HEATING CONTROL DEVICE AND CONTROL PROGRAM, FLUID HEATING UNIT, HEATING CYCLE DEVICE, AND VEHICLE AIR CONDITIONING DEVICE COMPRISING SAME**

(30) Priority: 24.08.2021 JP 2021136317
(71) Applicant: Valeo Japan Co., Ltd., Kumagaya-shi, Saitama 360-0193 (JP)
(72) Inventor: LEI, Mo, Kumagaya-shi Saitama 360-0193 (JP)
(74) Representative: Valeo Systèmes Thermiques
(86) International application number: PCT/JP2022/030698
(87) International publication number: WO 2023/026871

(57) **Abstract**

Problem

An object of the present disclosure is to provide an air-heating control device and a control program configured to appropriately grasp that a supply of heat transfer medium is less than a predetermined flow rate, a fluid heating unit, an air-heating cycle device, and a vehicle air conditioner including the same.

Solution

An air-heating control device 6 according to the present disclosure stores a temperature increase map indicating a relationship between a flow rate of a coolant and a rate of temperature rise of the coolant on a downstream side of a heater for a case where a heating amount of the heater 4 is a predetermined amount, has an initial air-heating mode that is executed during a period from when energization of the heater is started to when a temperature of the coolant reaches a predetermined temperature, calculates, in the initial air-heating mode, a rate of temperature rise of the coolant based on a temperature of the coolant detected by a first temperature detection device 51, and derives, based on the temperature increase map, an estimated flow rate of the coolant corresponding to the rate of temperature rise calculated.

## Description

### Technical Field

The present disclosure relates to an air-heating control device and a control program, a fluid heating unit, an air-heating cycle device, and a vehicle air conditioner including the same.

### Background Art

Heretofore, a vehicle air conditioner using a hot water type air-heating device that performs air-heating using hot water has been known (see Patent Literature 1, for example). The vehicle air conditioner described in Patent Literature 1 includes a first switch and a second switch. A target temperature of hot water for a case where the vehicle air conditioner is started with the second switch is set to a value lower than a target temperature of hot water for a case where the vehicle air conditioner is started with the first switch, so that a comfortable air-heating temperature can be achieved during air-heating when a vehicle interior has a high temperature.

Further, as a heater of a hot water type air-heating device, a fluid heating unit for heating a fluid with an electric heater is disclosed (see Patent Literature 2, for example).

As a method of controlling an amount of electric power to be supplied to an electric heater, a method of supplying the electric heater with duty-controlled DC power, powered by a battery, by an inverter is known (see Patent Literature 3, for example).

In the meantime, a method used in an electric heating type hot water heating apparatus is proposed. According to the method, water vapor is generated on the surface and periphery of a heating element in contact with a heat transfer medium, which is a fluid to be heated, and the water vapor is smoothly discharged from around the heating element by passing the heat transfer medium from below to above (see Patent Literature 4, for example).

### Citation List

### Patent Literature

Patent Literature 1: JPH10-258630A
Patent Literature 2: JP2017-215084A
Patent Literature 3: JP2003-335127A
Patent Literature 4: JP2013-126844A

### Summary of Invention

### Technical Problem

The method of supplying electric power to the electric heater as described in Patent Literatures 1 and 3 is used in the fluid heating unit as described in Patent Literature 2, which makes it possible to obtain hot water having a temperature close to a target temperature.

However, in order to obtain hot water (heat transfer medium) having a temperature close to a target temperature by using the techniques of Patent Literatures 1 to 3, a flow rate of the heat transfer medium flowing through the electric heating type hot water heating apparatus must be a predetermined flow rate. In a case where the heat transfer medium at the predetermined flow rate is supplied and predetermined electric power is supplied, the heat transfer medium at the time of flowing out of the hot water heating apparatus has a predetermined temperature. However, in a case where the heat transfer medium at the predetermined flow rate is not supplied for some reason such as a pump failure, the heat transfer medium having the predetermined temperature cannot be obtained unless the amount of electric power to be supplied is appropriately reduced.

In a case where the flow rate of the heat transfer medium is less than the predetermined flow rate and electric power set to heat the predetermined flow rate is supplied, the heat transfer medium may be overheated and a large amount of water vapor may be generated. In this case, it is desirable to smoothly discharge the water vapor from around the heating element by arranging a flow path for the heat transfer medium in the vertical direction as described in Patent Literature 4. However, for some reason, in a case where a configuration for passing the heat transfer medium, flowing through a heater, upward is impossible, water vapor can accumulate inside the hot water heating apparatus. Many devices are placed in a front compartment of a vehicle where the hot water heating apparatus is disposed (space separately formed in front of the vehicle interior space where passengers board). In order to avoid interference with other devices, it is not always possible to set the flow direction of the heat transfer medium flowing through the heater such that the heat transfer medium flows upward.

When a large amount of water vapor accumulates in the hot water heating apparatus, a surface temperature of the heater exposed to a water vapor region becomes higher than a temperature of the heater during normal operation (during heat generation when in contact with the liquid heat transfer medium). As a result, components of the heat transfer medium may be precipitated unintentionally, or the liquid heat transfer medium may come into contact, resulting in a quick increase in the pressure of the water vapor.

Based on the above, the inventor of the present application diligently studied a technique for properly grasping that a supply of heat transfer medium is less than a predetermined flow rate to reduce the amount of electric power to be supplied, and implemented the present invention.

An object of the present disclosure is to provide an air-heating control device and a control program configured to appropriately grasp that a supply of heat transfer medium is less than a predetermined flow rate, a fluid heating unit, an air-heating cycle device, and a vehicle air conditioner including the same.

### Solution to Problem

An air-heating control device according to the present invention is an air-heating control device (6) mounted in a fluid heating unit (10) to control a transistor (5), the fluid heating unit (10) including a housing (14), which includes an inlet (10b), a flow path (10c), and an outlet (10a) for a coolant and in which the inlet (10b) and the outlet (10a) are connected to a circulation flow path (2), a heater (4) that is disposed in the flow path (10c) and is energized to generate heat to thereby apply the heat to the coolant, a first temperature detection device (51) disposed on a downstream side of the heater (4), and the transistor (5) that supplies electric power to the heater (4) by a switching operation. The air-heating control device (6) controls the switching operation of the transistor (5), changes an on/off duty ratio of the transistor (5) to adjust a heating amount from the heater (4), stores a temperature increase map 850 (851, 852) indicating a relationship between a flow rate of the coolant and a rate of temperature rise of the coolant on a downstream side of the heater (4) for a case where a heating amount of the heater (4) is a predetermined amount, has an initial air-heating mode that is executed during a period from when energization of the heater (4) is started to when a temperature of the coolant reaches a predetermined temperature, calculates, in the initial air-heating mode, a rate of temperature rise of the coolant based on a temperature of the coolant detected by the first temperature detection device (51), and derives, based on the temperature increase map 850 (851, 852), an estimated flow rate of the coolant corresponding to the rate of temperature rise calculated.

It is preferable that the air-heating control device (6) according to the present invention makes, in a case where the estimated flow rate is less than a set flow rate, the heating amount smaller than a heating amount at the set flow rate. This configuration enables reducing the amount of electric power to be supplied and preventing the heater from being overheated.

The air-heating control device (6) according to the present invention preferably reduces the heating amount as a temperature of the coolant rises from a low temperature state to a high temperature state.

It is preferable that the air-heating control device (6) according to the present invention is mounted in a vehicle air conditioner, and estimates an estimated amount of heat radiation of the coolant in a heat radiator (7) provided in the circulation flow path (2), and the estimated flow rate is a value corrected based on the estimated amount of heat radiation. This configuration enables estimating the flow rate more accurately.

It is preferable that the air-heating control device (6) according to the present invention includes a derating mode that is executed after the initial air-heating mode, and in the derating mode, the air-heating control device (6) controls the switching operation of the transistor (5) based on a heating amount control profile 100 (100A to 100E), changes the on/off duty ratio of the transistor (5) to adjust a heating amount from the heater (4), the heating amount control profile 100 (100A to 100E) is a function indicating a relationship between a temperature of the coolant and a heating amount from the heater (4), and has a decrease part (110) in which the heating amount decreases as the temperature increases from a low temperature side to a high temperature side across a target temperature of the coolant, the decrease part (110) has a first decrease part (111) in which the temperature is within a temperature range of the target temperature (Tt) or less and a second decrease part (112) in which the temperature is within a temperature range of the target temperature (Tt) or more, and the first decrease part (111) and the second decrease part (112) have the heating amounts equal to each other at the target temperature (Tt), the first decrease part (111) and the second decrease part (112) each have a negative slope in the function, the first decrease part (111) has a first region (111A) and a second region (111B) that is on a high temperature side with respect to the first region (111A), and a slope of the heating amount control profile 100 (100A to 100E) at any temperature in the second region (111B) is more negative than a slope of the heating amount control profile 100 (100A to 100E) at any temperature in the first region (111A). According to this configuration, the temperature can early reach the target temperature, and control in which the fluctuations in temperature with respect to the target temperature are small can be performed.

A fluid heating unit according to the present invention includes a housing (14) having an inlet (10b), a flow path (10c), and an outlet (10a) for the coolant, a heater (4) that is disposed in the flow path (10c) and is energized to generate heat to thereby apply the heat to the coolant, a first temperature detection device (51) disposed on a downstream side of the heater (4), a transistor (5) that supplies electric power to the heater (4) by a switching operation, and the air-heating control device (6) according to the invention. The air-heating control device (6) controls the switching operation of the transistor (5).

In the fluid heating unit according to the present invention, a form in which the flow path (10c) extends in a substantially horizontal direction is included. Even in a fluid heating unit where water vapor might accumulate, it is possible to rapidly detect reduction in flow rate, which minimizes the influence due to the accumulation of water vapor.

The fluid heating unit 10 according to the present invention preferably further includes a second temperature detection device (52) on the upstream side of the heater (4). This configuration enables estimating the flow rate more accurately.

An air-heating cycle device according to the present invention includes a circulation flow path (2), a coolant filled in the circulation flow path (2), a pump (3) that circulates the coolant in the circulation flow path (2), the fluid heating unit (10) for controlling a temperature of the coolant according to the present invention, and a heat radiator (7) for radiating heat from the coolant. The coolant is heated when the heater (4) is energized by the transistor (5) in the fluid heating unit (10).

A vehicle air conditioner according to the present invention is a vehicle air conditioner (900) that includes the air-heating cycle device (1) according to the present invention and is mounted in a vehicle. The vehicle can be driven by an electric motor; the vehicle air conditioner (900) includes a temperature control unit (901) that controls a temperature of air supplied in a vehicle interior; and the heat radiator (7) is a hot water heat exchanger disposed in the temperature control unit (901).

A control program according to the present invention causes the air-heating control device (6) according to the present invention to execute the initial air-heating mode.

### Advantageous Effects of Invention

According to the present disclosure, it is possible to provide an air-heating control device and a control program configured to appropriately grasp that a supply of heat transfer medium is less than a predetermined flow rate, a fluid heating unit, an air-heating cycle device, and a vehicle air conditioner including the same.

### Brief Description of Drawings

[FIG. 1] FIG. 1 is a block diagram illustrating an example of a fluid heating unit, an air-heating cycle device, and a vehicle air conditioner including the same according to the present embodiment.
[FIG. 2] FIG. 2 is a diagram illustrating a rate of temperature rise of a coolant.
[FIG. 3] FIG. 3 is a graph illustrating a temperature increase map; (a) illustrates a first example, and (b) illustrates a second example.
[FIG. 4] FIG. 4 is a diagram illustrating an example of the relationship between a heating amount from a heater and a temperature of a coolant for a case where an estimated flow rate is a set flow rate.
[FIG. 5] FIG. 5 is a diagram illustrating an example of the relationship between a heating amount from a heater and a temperature of a coolant for a case where an estimated flow rate is less than a set flow rate.
[FIG. 6] FIG. 6 is a diagram illustrating a second example of a heating amount control profile.
[FIG. 7] FIG. 7 is a diagram illustrating a third example of the heating amount control profile.
[FIG. 8] FIG. 8 is a diagram illustrating a fourth example of the heating amount control profile.
[FIG. 9] FIG. 9 is a diagram illustrating a fifth example of the heating amount control profile.
[FIG. 10] FIG. 10 is a diagram illustrating a first example of a profile excluded from the heating amount control profile.
[FIG. 11] FIG. 11 is a diagram illustrating a second example of the profile excluded from the heating amount control profile.
[FIG. 12] FIG. 12 is a diagram illustrating a third example of the profile excluded from the heating amount control profile.
[FIG. 13] FIG. 13 is a diagram illustrating a fourth example of the profile excluded from the heating amount control profile.

### Description of Embodiments

An aspect of the present invention will be described below with reference to the accompanying drawings. An embodiment described below is an example of the present invention, and the present invention is not limited to the following embodiment. In the present specification and the drawings, elements having the same reference numerals indicate the same elements. Various modifications may be made as long as the effects of the present invention are achieved.

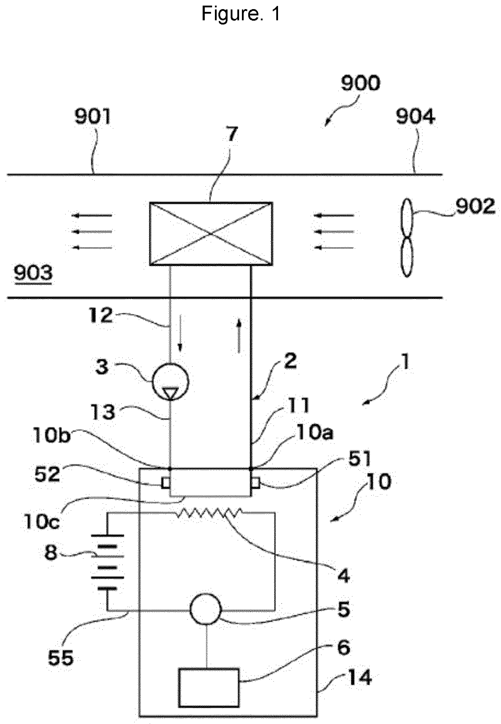

FIG. 1 is a block diagram illustrating an example of an air-heating cycle device, and a vehicle air conditioner including the same according to the present embodiment. An air-heating control device according to the present embodiment is an air-heating control device 6 mounted in a fluid heating unit 10 to control a transistor 5, the fluid heating unit 10 including a housing 14, which includes an inlet 10b, a flow path 10c, and an outlet 10a for a coolant and in which the inlet 10b and the outlet 10a are connected to a circulation flow path 2, a heater 4 that is disposed in the flow path 10c and is energized to generate heat to thereby apply the heat to the coolant, a first temperature detection device 51 disposed on a downstream side of the heater 4, and the transistor 5 that supplies electric power to the heater 4 by a switching operation. The air-heating control device 6 controls the switching operation of the transistor 5, changes an on/off duty ratio of the transistor 5 to adjust a heating amount from the heater 4, stores a temperature increase map indicating a relationship between a flow rate of the coolant and a rate of temperature rise of the coolant on a downstream side of the heater 4 for a case where a heating amount of the heater 4 is a predetermined amount, has an initial air-heating mode that is executed during a period from when energization of the heater 4 is started to when a temperature of the coolant reaches a predetermined temperature, calculates, in the initial air-heating mode, a rate of temperature rise of the coolant based on a temperature of the coolant detected by the first temperature detection device 51, and derives, based on the temperature increase map, an estimated flow rate of the coolant corresponding to the rate of temperature rise calculated.

The fluid heating unit 10 according to the present embodiment includes the housing 14 having the inlet 10b, the flow path 10c, and the outlet 10a for the coolant, the heater 4 that is disposed in the flow path 10c and is energized to generate heat to thereby apply the heat to the coolant, the first temperature detection device 51 disposed on a downstream side of the heater 4, the transistor 5 that supplies electric power to the heater 4 by a switching operation, and the air-heating control device 6 according to the present embodiment. The air-heating control device 6 controls the switching operation of the transistor 5.

In the fluid heating unit 10, the transistor 5 supplies the electric power to the heater 4 and the heater 4 generates heat to thereby heat the coolant to be supplied to a heat radiator 7 of the vehicle air conditioner. At this time, the air-heating control device 6 controls the switching operation of the transistor 5, changes an on/off duty ratio of the transistor 5, and adjusts the heating amount from the heater 4, so that the temperature of the coolant is controlled.

The housing 14 has the flow path 10c for the coolant as an internal space, which allows the coolant flowing in from the inlet 10b to be passed through to the outlet 10a. The housing 14 is made of metal such as aluminum alloy, or heat-resistant resin such as nylon 6-6.

The fluid heating unit 10 according to the present embodiment includes a form in which the flow path 10c extends in the substantially horizontal direction. The substantially horizontal direction means that the flow path 10c runs along the substantially horizontal direction of a vehicle when the fluid heating unit 10 is mounted on the vehicle. The concept of the substantially horizontal direction includes the horizontal direction and a direction slightly inclined with respect to the horizontal direction. In a case where the flow path 10c extends in the substantially horizontal direction, water vapor can accumulate in the flow path 10c. However, the air-heating control device 6 according to the present embodiment can rapidly detect reduction in the flow rate, as will be described later; therefore, the influence due to the accumulation of water vapor can be minimized.

The fluid heating unit 10 includes the heater 4, the housing 14 for accommodating the heater 4, and the transistor 5 placed on an upper wall of the housing 14, as with the fluid control unit described in Patent Literature 2.

The heater 4 is an electric heating element that generates heat when being energized, and is not particularly limited. For example, a sheathed heater in which a nichrome wire is wrapped in a metal pipe is used. The housing 14 includes a heating chamber through which the coolant flows and which accommodates the heater 4. Pre-heated coolant is introduced into the heating chamber through the inlet 10b, and heated coolant is led out of the heating chamber through the outlet 10a. The heating chamber has the first temperature detection device 51 for detecting a temperature T of the heated coolant on the downstream side of the heater 4. The first temperature detection device 51 is, for example, a temperature sensor. The first temperature detection device 51 is preferably provided near the outlet 10a. Even when the temperature of the coolant varies depending on the location in the heating chamber, the coolant flows out of the heating chamber, and converges at the outlet 10a where the coolant is mixed, so that the temperature of the coolant can be detected without variations. Further, it is more preferable that the first temperature detection device 51 is provided in the flow path 10c immediately before the outlet 10a. The first temperature detection device 51 is provided on the upstream side of the outlet 10a, which enables detecting the temperature before heat is unintentionally radiated from the coolant, so that the heat energy transferred from the heater 4 to the coolant can be detected with high accuracy.

The transistor 5 is preferably an insulated gate bipolar transistor (IGBT), for example. The transistor 5 is electrically connected to a battery 8. Further, the transistor 5 is electrically connected to the control device 6, and performs the switching operation in accordance with a command signal from the air-heating control device 6. The transistor 5 controls the supply of electric power to the heater 4 by the switching operation. By changing the on/off duty ratio of the transistor 5, the heating amount from the heater 4 can be adjusted, and an amount of heat applied to the coolant can be adjusted. The fluid heating unit 10 includes at least the heater 4, the transistor 5, the air-heating control device 6, and electric wiring 55 that connects the heater 4, the transistor 5, and the air-heating control device 6 to form an electric circuit together with the battery 8.

The coolant (not illustrated) is liquid at a room temperature, and is, for example, a heat transfer medium obtained by dissolving ethylene glycol or glycerin in water.

Preferably, the fluid heating unit 10 according to the present embodiment further includes a second temperature detection device 52 on the upstream side of the heater 4. This configuration enables estimating the flow rate more accurately.

An air-heating cycle device 1 according to the present embodiment includes the circulation flow path 2, the coolant filled in the circulation flow path 2, a pump 3 that circulates the coolant in the circulation flow path 2, the fluid heating unit 10 according to the present embodiment that controls the temperature of the coolant, and the heat radiator 7 that radiates heat from the coolant, and the coolant is heated when the heater 4 is energized by the transistor 5 in the fluid heating unit 10.

The air-heating cycle device 1 is a device that generates hot air for heating in the vehicle air conditioner by exchanging heat between the coolant whose temperature has been controlled by the fluid heating unit 10 and air passing through the heat radiator 7.

The circulation flow path 2 includes a pipe 11 that connects the outlet 10a of the housing 14 for accommodating the heater 4 to an inlet for the coolant of the heat radiator 7, a pipe 12 that connects an outlet for the coolant of the heat radiator 7 to the pump 3, and a pipe 13 that connects the pump 3 to the inlet 10b of the housing 14. Then, the coolant is delivered by the pump 3, introduced through the pipe 13 into the heating chamber in the housing 14 from the inlet 10b, and heated by the heater 4 built in the housing 14. Subsequently, the heated coolant is led out of the outlet 10a of the housing 14, delivered to the heat radiator 7 through the pipe 11, and the heat of the coolant is radiated to heat air for air conditioning. The coolant that has passed through the heat radiator 7 is sucked into the pump 3 through the pipe 12 and is circulated.

The heat radiator 7 is a hot water heat exchanger.

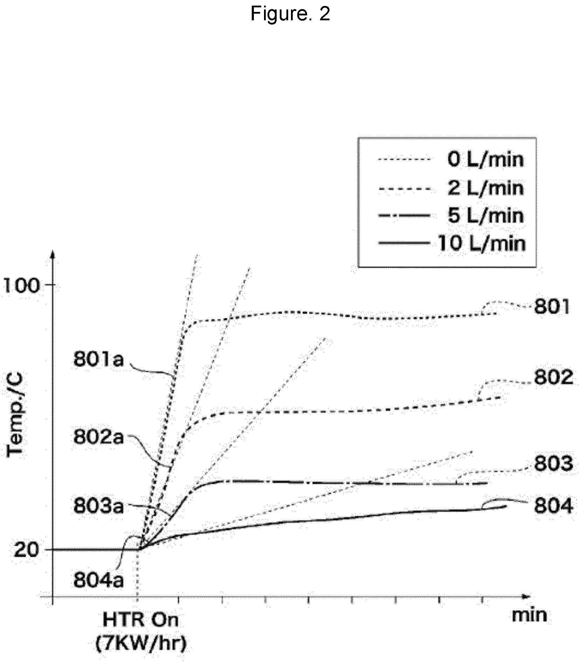

The temperature increase map illustrates the relationship between the flow rate of the coolant and the rate of temperature rise of the coolant on the downstream side of the heater 4 for a case where the heating amount of the heater 4 is a predetermined amount. Here, referring to FIG. 2, the description goes on to the relationship between the flow rate of the coolant and the rate of temperature rise of the coolant on the downstream side of the heater 4 for a case where the heating amount of the heater 4 is a predetermined amount.

FIG. 2 is a diagram illustrating a rate of temperature rise of the coolant. FIG. 2 illustrates graphs 801, 802, 803, and 804 each indicating the relationship between an elapsed time and a temperature of the coolant on the downstream side of the heater 4 for a case where the heating amount of the heater 4 is 7 kW/h. The graph 801 corresponds to a case where the flow rate is 0 L/min (0 L/h), the graph 802 corresponds to a case where the flow rate is 2 L/min (120 L/h), the graph 803 corresponds to a case where the flow rate is 5 L/min (300 L/h), and the graph 804 corresponds to a case where the flow rate is 10 L/min (600 L/h). The graphs 801, 802, 803, and 804 have rising parts 801a, 802a, 803a, and 804a respectively, in the early stage of heating of the heater 4. The early stage of heating of the heater 4 is preferably within 60 seconds from when energization of the heater 4 is started, and more preferably within 20 to 30 seconds from when the energization of the heater 4 is started. The rate of temperature rise of the coolant is represented by the slope of a tangent of the rising parts 801a, 802a, 803a, and 804a. The temperature of the coolant on the downstream side of the heater 4 is, for example, a temperature detected by the first temperature detection device 51.

The flow rate of the coolant is a volume of the coolant that flows through the circulation flow path 2 per unit time in the air-heating cycle device 1.

As illustrated in FIG. 2, in a case where the heating amount of the heater 4 is a predetermined amount, the rate of temperature rise of the coolant differs depending on the flow rate of the coolant. More specifically, the lower the flow rate of the coolant is, the faster the rate of temperature rise of the coolant tends to be. The temperature increase map represents the tendency by using a function.

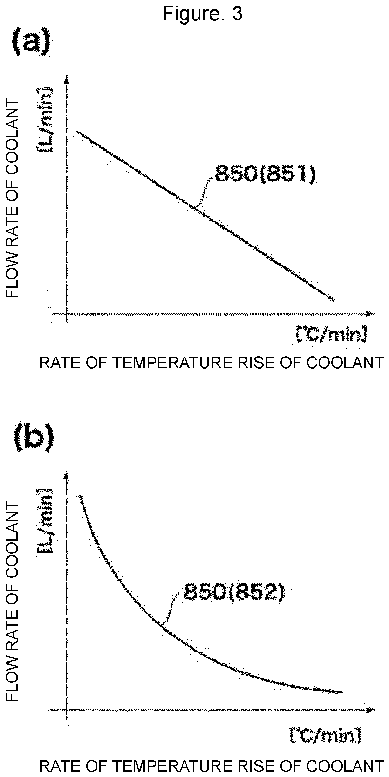

FIG. 3 is a graph illustrating a temperature increase map; (a) illustrates a first example, and (b) illustrates a second example. The temperature increase map is stored in a storage unit (not illustrated) of the air-heating control device 6. A temperature increase map 850 (851, 852) corresponds to a function indicating the relationship between the flow rate of the coolant and the rate of temperature rise of the coolant on the downstream side of the heater 4 for a case where the heating amount of the heater 4 is a predetermined amount. For example, as illustrated in FIGS. 3(a) and 3(b), in a case where a graph is displayed with a horizontal axis representing the rate of temperature rise of the coolant and a vertical axis representing the flow rate of the coolant, the temperature increase map 850 (851, 852) is, for example, represented as a graph such as the linear function 851 with a negative slope as illustrated in FIG. 3(a) or the inversely proportional function 852 as illustrated in FIG. 3(b).

The air-heating control device 6 preferably stores a plurality of temperature increase maps for each heating amount of the heater 4. For example, the air-heating control device 6 may store, as the temperature increase maps, a first temperature increase map for a heating amount of 100%, a second temperature increase map for a heating amount of 60%, and a third temperature increase map for a heating amount of 40%. In the present specification, a heating amount E of the heater 4 in the initial air-heating mode for a case where the estimated flow rate is a set flow rate is sometimes referred to as the heating amount of 100%.

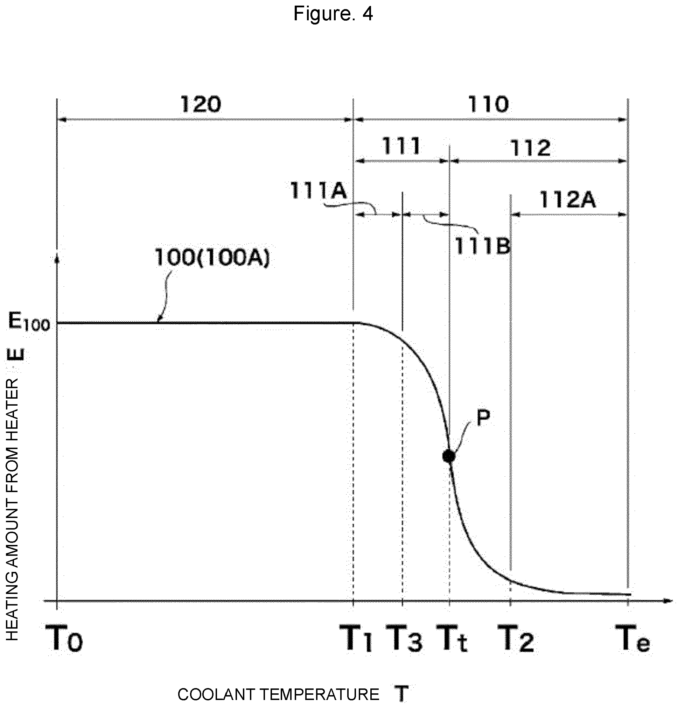

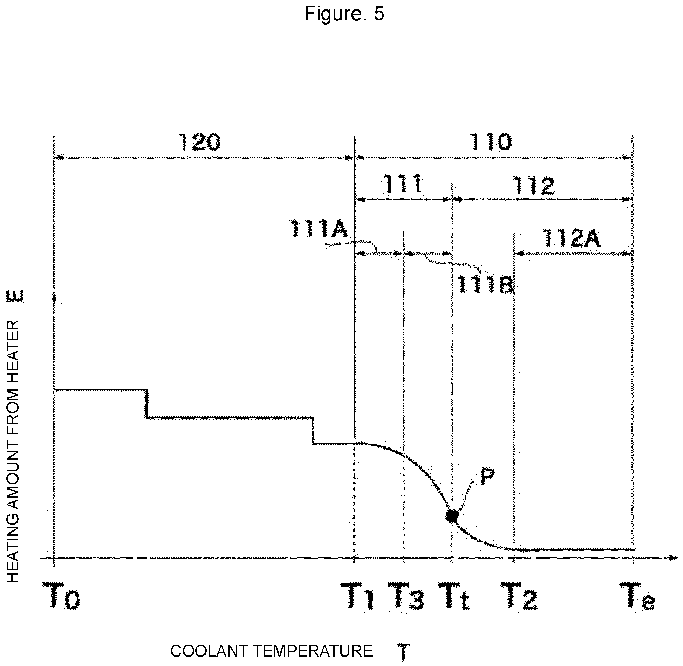

The initial air-heating mode is a mode that is executed during a period from T0 at which energization of the heater 4 is started to T1 at which the temperature of the coolant reaches the predetermined temperature (period denoted by reference numeral 120 in FIG. 4 or 5). It is preferable that T1 at which the temperature of the coolant reaches the predetermined temperature is {target temperature Tt} - 10 °C, and it is more preferable that T1 is {target temperature Tt}-8 °C. The target temperature Tt is, for example, 80 to 85 °C.

In the initial air-heating mode, the rate of temperature rise of the coolant is calculated, for example, in the following manner. The air-heating control device 6 acquires the temperature of the coolant detected by the first temperature detection device 51 at predetermined intervals Δt. Let X be a temperature of the coolant detected by the first temperature detection device 51 at a certain time t after the start of energization of the heater 4, and let X' be a temperature of the coolant detected by the first temperature detection device 51 at a time (t-Δt) that is Δt before the time t. Then, the rate of temperature rise of the coolant at the time t can be obtained by {(X-X')/Δt}. The predetermined intervals Δt are not particularly limited, and are three to five seconds, for example. Then, the air-heating control device 6 derives an estimated flow rate of the coolant corresponding to the calculated rate of temperature rise based on the temperature increase map. It is preferable that the operation of deriving the estimated flow rate of the coolant is continued for a predetermined period of time, and that the coolant is determined to be in a low flow rate state when the derived estimated flow rate is continuously determined to be lower than the set flow rate. The duration of the deriving operation is not particularly limited, but is 20 to 30 seconds, for example. The flow rate of the coolant is set to a predetermined flow rate (set flow rate) such as 10 L/min, for example. However, from the viewpoint of ensuring vehicle safety, it is necessary to assume a special case where the set flow rate of the coolant is not supplied for some reason such as a failure of the pump 3 or pipe leakage. In a case where the flow rate of the coolant is less than the set flow rate during operation of the fluid heating unit 10, the coolant boils to thereby generate abnormal heat locally, which may affect the reliability of the fluid heating unit 10. In the related art, a method has been used in which the flow rate of a coolant is estimated based on the temperature difference between a temperature on the upstream side of the fluid heating unit 10 and a temperature on the downstream side thereof. However, the method has a difficulty in detecting the flow rate accurately because the temperature difference is unstable due to the occurrence of abnormal heat at the low flow rate. In light of the above, in the air-heating control device according to the present embodiment, the flow rate is detected by using the temperature on the downstream side of the fluid heating unit 10.

FIG. 4 is a diagram illustrating an example of the relationship between a heating amount from a heater and a temperature of a coolant for a case where an estimated flow rate is a set flow rate. In a case where the estimated flow rate is the set flow rate, as illustrated in FIG. 4, the air-heating control device 6 preferably keeps the heating amount constant at a predetermined heating amount E₁₀₀ even when the temperature T rises from the low temperature state to the high temperature state in the initial air-heating mode. The heating amount E₁₀₀ at the set flow rate is, for example, 7 kW/h.

FIG. 5 is a diagram illustrating an example of the relationship between a heating amount from a heater and a temperature of a coolant for a case where an estimated flow rate is less than a set flow rate. In a case where the estimated flow rate is less than the set flow rate, the air-heating control device 6 according to the present embodiment preferably makes the heating amount E smaller than the heating amount E₁₀₀ at the set flow rate. This configuration enables reducing the amount of electric power to be supplied and preventing the heater from being overheated. In a case where the estimated flow rate is less than the set flow rate, the air-heating control device 6 adjusts the heating amount from the heater 4 by making the on/off duty ratio of the transistor 5 smaller than a duty ratio at the set flow rate.

The air-heating control device 6 according to the present embodiment preferably reduces the heating amount E as the coolant temperature rises from the low temperature state to the high temperature state. The form of reducing the heating amount E includes a form of reducing the heating amount E stepwise as illustrated in FIG. 5 or a form of reducing the heating amount E gradually (not illustrated). For example, in a case where the set flow rate is 10 L/min and the estimated flow rate is 5 L/min, the air-heating control device 6 reduces the heating amount E from the heater 4 to 60% of the heating amount (for example, 7 kW/h) at the set flow rate as illustrated in FIG. 5. Then, in a case where the coolant temperature rises from 0 °C to 20 °C, the air-heating control device 6 reduces the heating amount E from the heater 4 to 50% of the heating amount (for example, 7 kW/h) at the set flow rate. Next, in a case where the coolant temperature rises from 20 °C to 60 °C, the air-heating control device 6 reduces the heating amount E from the heater 4 to 40% of the heating amount (for example, 7 kW/h) at the set flow rate. As described above, the air-heating control device 6 performs control to reduce the heating amount E as the coolant temperature rises from the low temperature state to the high temperature state.

The air-heating control device 6 preferably performs control as follows. The air-heating control device 6 calculates the rate of temperature rise of the coolant from the start of energization of the heater 4, and derives the estimated flow rate based on the temperature increase map for a heating amount of 100%. At this time, the electric power corresponding to the heating amount of 100% at the set flow rate is applied to the heater 4 (step 1). When determining that the estimated flow rate is less than the set flow rate in step 1, the air-heating control device 6 reduces a rate of electric power application, for example, from 100% to 60% so that a heating amount corresponding to the derived estimated flow rate is achieved (step 2). Then, the actual rate of temperature rise of the coolant under the heating amount of 60% is compared with the rate of temperature rise of the coolant in the temperature increase map for a heating amount of 60% to confirm and verify whether the estimated flow rate derived in step 1 is appropriate or whether there is an error (step 3). As a result of the confirmation and verification in step 3, if the error is large, then an estimated flow rate (second estimated flow rate) is derived based on the temperature increase map for a heating amount of 60% (step 4). Next, the rate of electric power application is changed so as to achieve a heating amount corresponding to the second estimated flow rate (step 5). In step 5, the change in the rate of application may be a decrease in the rate of application or an increase in the rate of application. Thereafter, steps 3 to 5 may be repeated as necessary. The control described above is performed to thereby prevent water vapor from accumulating in the fluid heating unit 10. Further, the amount of heat radiation can be early stabilized in the heat radiator.

It is preferable that the air-heating control device 6 according to the present embodiment is mounted in a vehicle air conditioner, and estimates an estimated amount of heat radiation of the coolant in the heat radiator 7 provided in the circulation flow path 2, and the estimated flow rate is a value corrected based on the estimated amount of heat radiation. The temperature of the coolant flowing into the fluid heating unit 10 tends to decrease as the amount of heat radiation from the heat radiator 7 increases. Therefore, as the amount of heat radiation from the heat radiator 7 increases, the rate of temperature rise of the coolant becomes slower, and an error may occur in which the estimated flow rate is greater than the true flow rate. In light of the above, it is possible to estimate the flow rate more accurately by adding a factor of the amount of heat radiation from the heat radiator 7 in the temperature increase map and making a correction.

The estimated amount of heat radiation can be obtained, for example, as follows. The estimated flow rate can be obtained based on the amount of circulation of the coolant in the circulation flow path 2, the temperature of the coolant on the downstream side of the heater 4 (temperature detected by the first temperature detection device 51), and the temperature of the coolant on the upstream side of the heater 4 (temperature detected by the second temperature detection device 52). Alternatively, the amount of heat radiation from the heat radiator per unit time may be estimated by multiplying a difference (air temperature difference between the upstream and the downstream of the heat radiator 7) between a temperature B of air flowing out of the heat radiator 7 (temperature of the air on the downstream side of the heat radiator 7 before mixing with air distributed by an air mix door (not illustrated) to bypass the heat radiator 7) and a temperature A of air flowing into the heat radiator 7 (temperature estimated based on the outside air temperature, the inside air temperature, and the mixture ratio of the outside air and the inside air adjusted by an intake door) by the flow rate of the air flowing into the heat radiator 7, based on the flow rate of the air flowing into the heat radiator 7 (value obtained by multiplying the air volume of a blower 902 by a distribution ratio indicating distribution to the heat radiator 7 side by the air mix door), the temperature A, and the temperature B. The correction to the estimated flow rate based on the estimated amount of heat radiation is preferably made in the temperature increase map so that the rate of temperature rise of the coolant increases as the estimated amount of heat radiation increases.

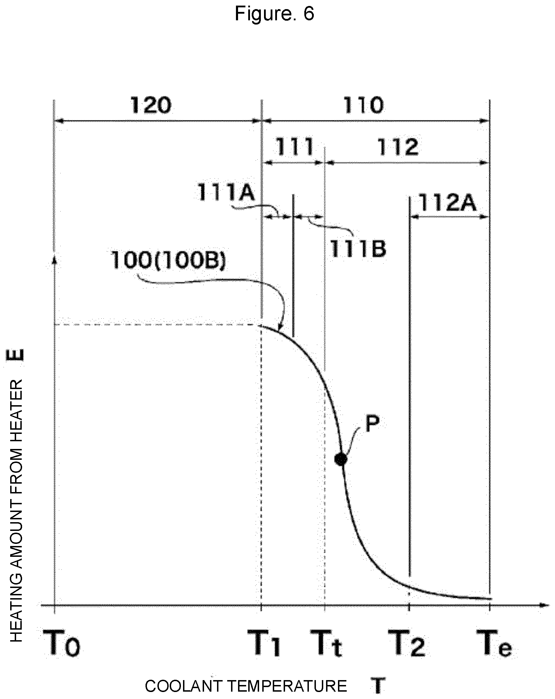

As illustrated in FIGS. 4 to 9, it is preferable that the air-heating control device 6 according to the present embodiment includes a derating mode that is executed after the initial air-heating mode, and in the derating mode, the air-heating control device 6 controls the switching operation of the transistor 5 based on a heating amount control profile 100 (100A to 100E), changes the on/off duty ratio of the transistor 5 to adjust a heating amount from the heater 4, the heating amount control profile 100 (100A to 100E) is a function indicating a relationship between a temperature T of the coolant and a heating amount E from the heater 4, and has a decrease part 110 in which the heating amount E decreases as the temperature T increases from a low temperature side to a high temperature side across a target temperature Tt of the coolant, the decrease part 110 has a first decrease part 111 in which the temperature T is within a temperature range of the target temperature Tt or less and a second decrease part 112 in which the temperature T is within a temperature range of the target temperature Tt or more, and the first decrease part 111 and the second decrease part 112 have the heating amounts E equal to each other at the target temperature Tt, the first decrease part 111 and the second decrease part 112 each have a negative slope in the function, the first decrease part 111 has a first region 111A and a second region 111B that is on a high temperature side with respect to the first region 111A, and a slope of the heating amount control profile 100 (100A to 100E) at any temperature in the second region 111B is more negative than a slope of the heating amount control profile 100 (100A to 100E) at any temperature in the first region 111A. In FIGS. 6 to 9, the change in the heating amount during the period 120 in which the initial air-heating mode is executed is indicated by a dotted line, and as illustrated in FIG. 4 or FIG. 5, the heating amount depending on the estimated flow rate is given.

In the derating mode, the air-heating control device 6 controls the switching operation of the transistor 5 based on the heating amount control profile 100 (100A to 100E). This configuration makes it possible to early reach the target temperature and to perform control in which the fluctuations in temperature with respect to the target temperature are small.

As illustrated in FIGS. 4 to 9, the heating amount control profile 100 (100A to 100E) is a function indicating the relationship between the temperature T of the coolant and the heating amount E from the heater. In FIGS. 4 to 9, the heating amount control profile 100 (100A to 100E) is indicated as a graph in which a horizontal axis represents the temperature T of the coolant and a vertical axis represents the heating amount E from the heater 4. The temperature T of the coolant is preferably, for example, the temperature of the coolant led out of the outlet 10a of the fluid heating unit 10, and a unit thereof is, for example, °C. The heating amount E from the heater 4 is, for example, a value adjusted by the on/off duty ratio of the transistor 5, and a unit thereof is, for example, KW/h.

A decrease part 110 is a portion in which the heating amount E decreases as the temperature T increases from the low temperature side to the high temperature side across the target temperature Tt of the coolant. In FIGS. 4 to 9, the decrease part 110 is a temperature range from a temperature T1 at which the heating amount E starts to decrease to a temperature Te at which the heating amount E is as close to zero as possible or a temperature (not illustrated) at which the heating amount E is zero.

The first decrease part 111 is a temperature range, of the decrease part 110, from the temperature T1 at which the heating amount E starts to decrease to the target temperature Tt or less. The first decrease part 111 includes a first region 111A and a second region 111B that is on a high temperature side with respect to the first region 111A. A boundary between the first region 111A and the second region 111B is not particularly limited. In FIG. 5, as an example, the boundary is, for example, a temperature T3 obtained by bisecting the range between the temperature T1 corresponding to the start of the decrease part 110 and the target temperature Tt, but any temperature may be used as the boundary.

The second decrease part 112 is a temperature range, of the decrease part, from at least the target temperature Tt to the temperature Te at which the heating amount E is as close to zero as possible or a temperature (not illustrated) at which the heating amount E is zero.

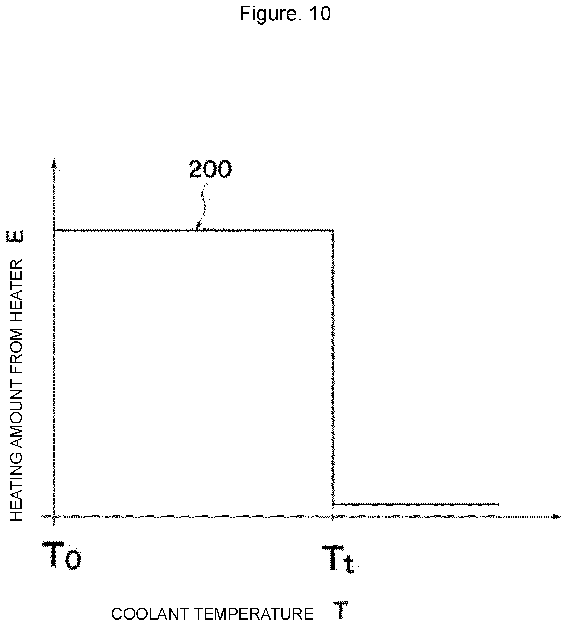

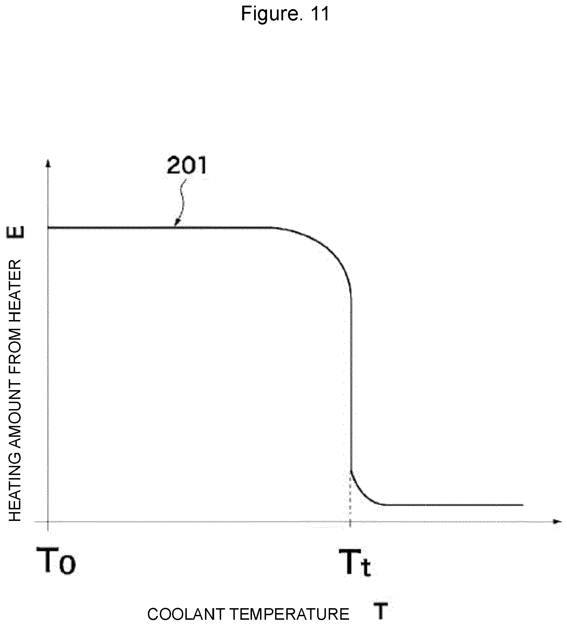

As illustrated in FIGS. 4 to 9, the first decrease part 111 and the second decrease part 112 have the same heating amount E at the target temperature Tt. Therefore, as illustrated in FIG. 10 or 11, a profile 200 or 201 in which the heating amount decreases at the target temperature Tt is excluded from the heating amount control profile 100. FIG. 10 illustrates simple on/off control, and FIG. 11 illustrates a modification to FIG. 10. In the profile 200 as illustrated in FIG. 10 or the profile 201 as illustrated in FIG. 11, since the heating amount E sharply decreases at the target temperature Tt, the fluctuations in temperature with respect to the target temperature increases. This is because the heat of the coolant is radiated by the heat radiator 7 and the temperature T of the coolant sharply decreases from the target temperature if the heating amount is suddenly set to "zero" in response to the temperature rising and reaching the target temperature Tt.

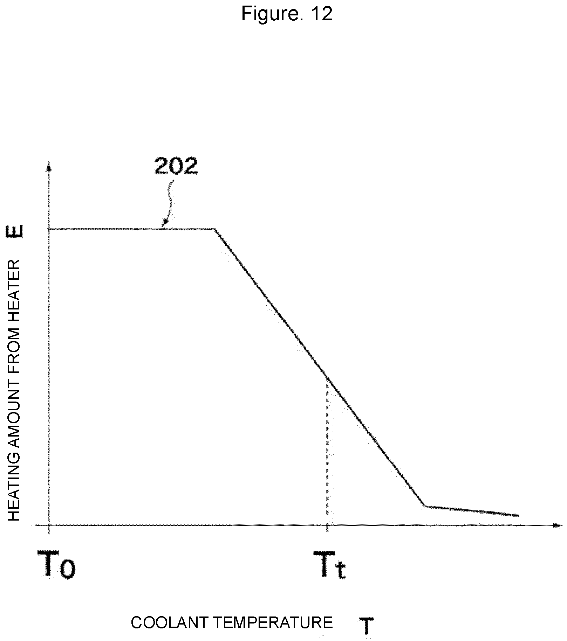

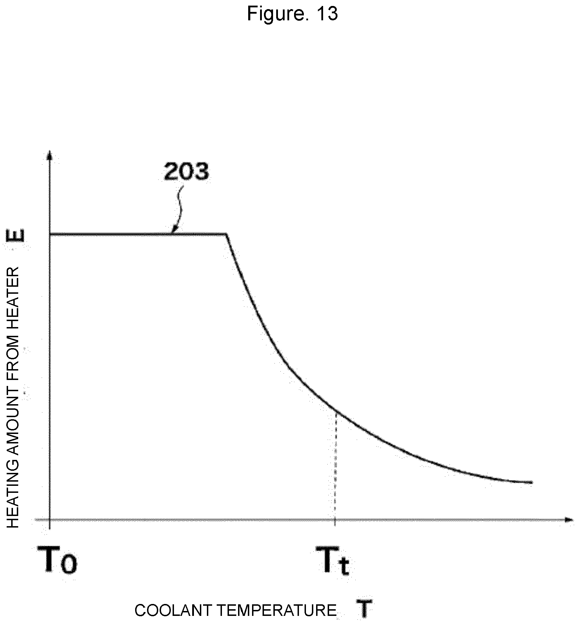

As illustrated in FIGS. 4 to 9, the first decrease part 111 and the second decrease part 112 each have the negative slope in the function, and the slope of the heating amount control profile 100 (100A to 100E) at any temperature in the second region 111B is more negative than the slope of the heating amount control profile 100 (100A to 100E) at any temperature in the first region 111A. Accordingly, the temperature can early reach the target temperature, and the fluctuations in temperature with respect to the target temperature can be reduced. For example, a profile 202 in which the slope is always constant in the first decrease part 111 as illustrated in FIG. 12, and a profile 203 in which the slope at any temperature in the second region 111B is less negative than the slope at any temperature in the first region 111A as illustrated in FIG. 13 are excluded from the heating amount control profile 100. In the profile 202 as illustrated in FIG. 12 or the profile 203 as illustrated in FIG. 13, the temperature rising rate is slow, and the target temperature cannot be reached early.

In the air-heating cycle device according to the present embodiment, as illustrated in FIGS. 4 to 9, the second decrease part 112 preferably includes, on the high temperature side with respect to the target temperature Tt, a heat radiation amount corresponding region 112A in which the heating amount E is maintained at a predetermined heating amount. The heat radiation amount corresponding region 112A is a region in which the heating amount E is brought close to zero but not zero. More preferably, the Te at the end time of the heat radiation amount corresponding region 112A is {target temperature Tt + 8 °C} ± 1 °C. Preferably, a T2 at the start time of the heat radiation amount corresponding region 112A is {target temperature Tt + 4 °C} ± 1 °C. The heat radiator 7 radiates heat, and the coolant temperature T falls below the target temperature if the heating amount is suddenly set to "zero" in response to the temperature rising and exceeding the target temperature Tt, which leads to temperature hunting. However, by providing the heat radiation amount corresponding region 112A, the temperature hunting can be prevented.

In the heating amount control profile 100 (100A to 100E), the temperature T at which the heating amount E is zero is preferably 90 °C. When the temperature T exceeds 90 °C, problems may occur, such as unintended precipitation of components dissolved in the coolant, or a decrease in heat conduction due to generation of bubbles at an interface between the coolant and a heat transfer wire.

Next, examples of the heating amount control profile 100 (100A to 100E) will be described in more detail.

As illustrated in FIG. 4 or 5, the heating amount control profile 100A includes a form in which the decrease part 110 is a curve having an inflection point P and the temperature T at the inflection point P coincides with the target temperature Tt. In the heating amount control profile 100 (100A) of the first example, the temperature can reach the target temperature Tt within 15 minutes, for example, and the temperature with respect to the target temperature Tt can be controlled within a range of {target temperature Tt} ± 1 °C, for example. Further, since the temperature T at the inflection point P coincides with the target temperature Tt, it is possible to perform control so that the fluctuations in temperature with respect to the target temperature Tt are small.

As illustrated in FIG. 6, the heating amount control profile 100B includes a form in which the decrease part 110 is a curve having an inflection point P and the temperature T at the inflection point P is higher than the target temperature Tt. The temperature T at the inflection point P is preferably higher than {target temperature Tt} + 0 °C and + 4 °C or less, and is more preferably {target temperature Tt} + 1 °C or more and + 2 °C or less. When the temperature T at the inflection point P exceeds {target temperature Tt} + 4 °C, the coolant may be excessively heated with respect to the target temperature. In the heating amount control profile 100 (100B) of the second example, the temperature can reach the target temperature Tt within 15 minutes, for example, and the temperature with respect to the target temperature Tt can be controlled within a range of {target temperature Tt} ± 1 °C, for example. Further, since the temperature T at the inflection point P is on the high temperature side with respect to the target temperature Tt, it is easy to set the heating amount E from the heater to be relatively large when the temperature T of the coolant is the target temperature Tt, and in particular, in the vehicle air conditioner 900 in which the amount of heat radiation in the heat radiator 7 is relatively large, it is possible to suitably perform control so that the fluctuations in temperature with respect to the target temperature Tt are small.

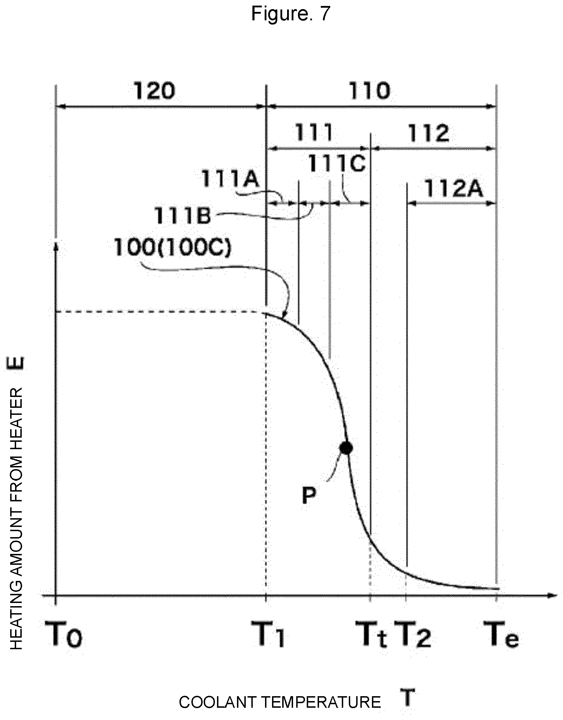

As illustrated in FIG. 7, the heating amount control profile 100C includes a form in which the decrease part 110 is a curve having an inflection point P and the temperature T at the inflection point P is lower than the target temperature Tt and the second region 111B is within a region on the low temperature side with respect to the inflection point P. The temperature T at the inflection point P is preferably {target temperature Tt} - 4 °C or more and lower than 0 °C, and is more preferably {target temperature Tt} - 1 °C or more and - 2 °C or less. In a case where the temperature T at the inflection point P is lower than {target temperature Tt} - 4 °C, a time necessary for the temperature to reach the target temperature Tt is sometimes long. In the heating amount control profile 100 (100C) of the third example, the first decrease part 111 includes a third region 111C that is a region on the high temperature side with respect to the temperature at the inflection point P. In the heating amount control profile 100 (100C) of the third example, the temperature can reach the target temperature Tt within 15 minutes, for example, and the temperature with respect to the target temperature Tt can be controlled within a range of {target temperature Tt} ± 1 °C, for example. Further, since the temperature T at the inflection point P is on the low temperature side with respect to the target temperature Tt, it is easy to set the heating amount E from the heater to be relatively small when the temperature T of the coolant is the target temperature Tt, and in particular, in the vehicle air conditioner 900 in which the amount of heat radiation in the heat radiator 7 is relatively small, it is possible to suitably perform control so that the fluctuations in temperature with respect to the target temperature Tt are small.

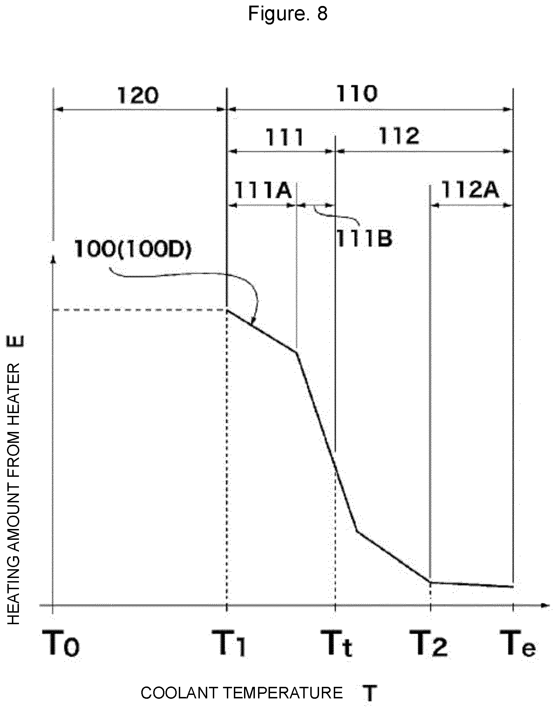

As illustrated in FIG. 8, the heating amount control profile 100D includes a form in which both the first region 111A and the second region 111B are linear functions with mutually different slopes in the function. In the heating amount control profile 100 (100D) of the fourth example, the temperature can reach the target temperature Tt within 15 minutes, for example, and the temperature with respect to the target temperature Tt can be controlled within a range of {target temperature Tt} ± 1 °C, for example.

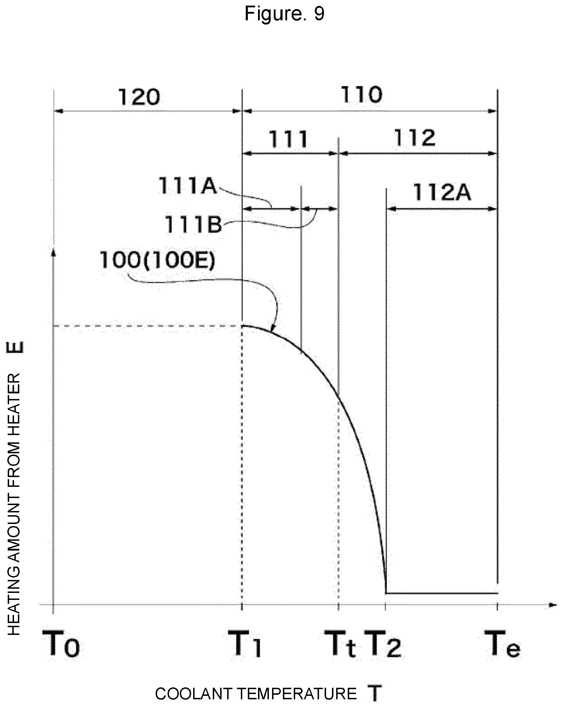

As illustrated in FIG. 9, the heating amount control profile 100E includes a form in which the decrease part 110 is a curve with no inflection point. In the heating amount control profile 100 (100E) of the fifth example, the temperature can reach the target temperature Tt within 15 minutes, for example, and the temperature with respect to the target temperature Tt can be controlled within a range of {target temperature Tt} ± 1 °C, for example.

As illustrated in FIG. 1, the vehicle air conditioner 900 according to the present embodiment includes the air-heating cycle device 1 according to the present embodiment and is mounted in a vehicle. The vehicle can be driven by an electric motor, the vehicle air conditioner 900 includes a temperature control unit 901 that controls a temperature of air supplied in a vehicle interior; and the heat radiator 7 is a hot water heat exchanger disposed in the temperature control unit 901.

The vehicle air conditioner 900 includes a blower unit 904 and the temperature control unit 901. The blower unit 904 is provided with the blower 902 that blows air taken in from an inside air inlet and/or an outside air inlet (not illustrated) toward an air flow path 903. An internal space of the temperature control unit 901 is the air flow path 903, and the hot water heat exchanger (heat radiator) 7 is disposed in the air flow path 903. It is preferable that the vehicle air conditioner 900 further includes, on the upstream side of the hot water heat exchanger 7 in the air flow path 903, a cooling heat exchanger (not illustrated) that dehumidifies and cools the air sent from the blower unit 904 as necessary, and an air mix door (not illustrated) that is disposed between the cooling heat exchanger and the hot water heat exchanger 7 to adjust a ratio of the air passing through the hot water heat exchanger 7 and the air bypassing the hot water heat exchanger 7. A defrost opening (not illustrated), a vent opening (not illustrated), and a foot opening (not illustrated) are provided at the most downstream portion of the temperature control unit 901. Each opening is indirectly or directly connected to an air outlet (not illustrated) in the vehicle interior via a duct (not illustrated).

The vehicle includes, for example, an electric vehicle (EV) driven only by an electric motor, a hybrid electric vehicle (HEV) driven by a plurality of power sources including an electric power motor and an internal combustion engine, or a vehicle in which an internal combustion engine generates only electric power and which is driven by the electric motor driven by the electric power generated by the internal combustion engine. In these vehicles, the total amount of coolant in the coolant loop tends to be smaller than that of vehicles equipped with an engine. In a case where the flow rate of the coolant is reduced due to some trouble, the heater 4 is exposed from the coolant and the surface temperature of the heater 4 tends to be abnormally high temperature. However, the air-heating cycle device 1 installed in the vehicle air conditioner according to the present embodiment can early detect reduction in the flow rate.

The control program according to the present embodiment causes the air-heating control device 6 according to the present embodiment to execute the initial air-heating mode. The air-heating control device 6 includes a storage unit (not illustrated), and functions as an air-heating control device by executing the control program read out from the storage unit. Execution of the control program includes, for example, the following processes. First, the temperature of the coolant detected by the first temperature detection device 51 is detected, and the rate of temperature rise of the coolant is calculated. Then, the temperature increase map is used to read the flow rate (estimated flow rate) of the coolant corresponding to the calculated rate of temperature rise of the coolant. In a case where the estimated flow rate is less than the set flow rate, the transistor 5 is controlled so that duty control is performed to give the heater 4 a heating amount corresponding to the estimated flow rate.

### Reference Signs List

1: Air-heating cycle device
2: Circulation flow path
3: Pump
4: Heater
5: Transistor
6: Air-heating control device
7: Heat radiator
8: Battery
10: Fluid heating unit
10a: Outlet
10b: Inlet
10c: Flow path
11, 12, 13: Pipe
14: Housing
51: First temperature detection device
52: Second temperature detection device
55: Electric wiring
100 (100Ato 100E): Heating amount control profile
110: decrease part
111: First decrease part
111A: First region
111B: Second region
111C: Third region
112: Second decrease part
112A: Heat radiation amount corresponding region
200, 201, 202, 203: Profile
801, 802, 803, 804: Graph
801a, 802a, 803a, 804a: Rising part
850 (851, 852): Temperature increase map
900: Vehicle air conditioner
901: Temperature control unit
902: Blower
903: Air flow path
904: Blower unit

## Claims

1. An air-heating control device (6) mounted in a fluid heating unit (10) to control a transistor (5), the fluid heating unit (10) including a housing (14), which includes an inlet (10b), a flow path (10c), and an outlet (10a) for a coolant and in which the inlet (10b) and the outlet (10a) are connected to a circulation flow path (2), a heater (4) that is disposed in the flow path (10c) and is energized to generate heat to thereby apply the heat to the coolant, a first temperature detection device (51) disposed on a downstream side of the heater (4), and the transistor (5) that supplies electric power to the heater (4) by a switching operation, wherein
the air-heating control device (6) controls the switching operation of the transistor (5), changes an on/off duty ratio of the transistor (5) to adjust a heating amount from the heater (4), stores a temperature increase map 850 (851, 852) indicating a relationship between a flow rate of the coolant and a rate of temperature rise of the coolant on a downstream side of the heater (4) for a case where a heating amount of the heater (4) is a predetermined amount, has an initial air-heating mode that is executed during a period from when energization of the heater (4) is started to when a temperature of the coolant reaches a predetermined temperature, calculates, in the initial air-heating mode, a rate of temperature rise of the coolant based on a temperature of the coolant detected by the first temperature detection device (51), and derives, based on the temperature increase map 850 (851, 852), an estimated flow rate of the coolant corresponding to the rate of temperature rise calculated.

2. The air-heating control device (6) according to claim 1, wherein in a case where the estimated flow rate is less than a set flow rate, the air-heating control device(6) makes the heating amount smaller than a heating amount at the set flow rate.

3. The air-heating control device (6) according to claim 2, wherein the air-heating control device (6) reduces the heating amount as a temperature of the coolant rises from a low temperature state to a high temperature state.

4. The air-heating control device (6) according to any one of claims 1 to 3, wherein
the air-heating control device (6) is mounted in a vehicle air conditioner, and estimates an estimated amount of heat radiation of the coolant in a heat radiator (7) provided in the circulation flow path (2), and
the estimated flow rate is a value corrected based on the estimated amount of heat radiation.

5. The air-heating control device (6) according to any one of claims 1 to 4, wherein
the air-heating control device (6) includes a derating mode that is executed after the initial air-heating mode, and in the derating mode, the air-heating control device (6) controls the switching operation of the transistor (5) based on a heating amount control profile 100 (100A to 100E), changes the on/off duty ratio of the transistor (5) to adjust a heating amount from the heater (4),
the heating amount control profile 100 (100A to 100E) is a function indicating a relationship between a temperature of the coolant and a heating amount from the heater (4), and has a decrease part (110) in which the heating amount decreases as the temperature increases from a low temperature side to a high temperature side across a target temperature of the coolant,
the decrease part (110) has a first decrease part (111) in which the temperature is within a temperature range of the target temperature (Tt) or less and a second decrease part (112) in which the temperature is within a temperature range of the target temperature (Tt) or more, and the first decrease part (111) and the second decrease part (112) have the heating amounts equal to each other at the target temperature (Tt),
the first decrease part (111) and the second decrease part (112) each have a negative slope in the function,
the first decrease part (111) has a first region (111A) and a second region (111B) that is on a high temperature side with respect to the first region (111A), and
a slope of the heating amount control profile 100 (100A to 100E) at any temperature in the second region (111B) is more negative than a slope of the heating amount control profile 100 (100A to 100E) at any temperature in the first region (111A).

6. A fluid heating unit including a housing (14) having an inlet (10b), a flow path (10c), and an outlet (10a) for the coolant, a heater (4) that is disposed in the flow path (10c) and is energized to generate heat to thereby apply the heat to the coolant, a first temperature detection device (51) disposed on a downstream side of the heater (4), a transistor (5) that supplies electric power to the heater (4) by a switching operation, and the air-heating control device (6) according to any one of claims 1 to 5, wherein
the air-heating control device (6) controls the switching operation of the transistor (5).

7. The fluid heating unit according to claim 6, wherein the flow path (10c) extends in a substantially horizontal direction.

8. The fluid heating unit (10) according to claim 6 or 7, further including a second temperature detection device (52) on an upstream side of the heater (4).

9. An air-heating cycle device including a circulation flow path (2), a coolant filled in the circulation flow path (2), a pump (3) that circulates the coolant in the circulation flow path (2), the fluid heating unit (10) for controlling a temperature of the coolant according to any one of claims 6 to 8, and a heat radiator (7) for radiating heat from the coolant, wherein
the coolant is heated when the heater (4) is energized by the transistor (5) in the fluid heating unit (10).

10. A vehicle air conditioner (900) including the air-heating cycle device (1) according to claim 9 and being mounted in a vehicle, wherein
the vehicle can be driven by an electric motor;
the vehicle air conditioner (900) includes a temperature control unit (901) that controls a temperature of air supplied in a vehicle interior; and
the heat radiator (7) is a hot water heat exchanger disposed in the temperature control unit (901).

11. A control program causing the air-heating control device (6) according to any one of claims 1 to 5 to execute the initial air-heating mode.
